# EUROPEAN PATENT APPLICATION

(11) **EP 4 408 087 A1**
(43) Date of publication of application: **31.07.2024**
(21) Application number: 21957906.7
(22) Date of filing: 24.09.2021
(51) Int. Cl.: H04W 64/00

(54) **WIRELESS COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2021/120396
(87) International publication number: WO 2023/044779

(57) **Abstract**

Provided in the embodiments of the present application are a wireless communication method, and a device. The method comprises: a terminal device determining location information of the terminal device according to a first signal; and the terminal device reporting the location information, wherein the first signal is used for supplying energy to the terminal device. In this way, a terminal device is located, and the location of an article to which the terminal device is attached can thus be located.

## Description

### TECHNICAL FIELD

Embodiments of the disclosure relates to the field of communication, and in particular, to a wireless communication method and a device.

### BACKGROUND

At present, there are high requirements for power consumption of terminal devices in many communication industries. As such, the application of zero-power terminals has become a key technology in many communication industries.

A zero-power terminal may be applied in various scenarios. For example, a zero-power terminal may be set on goods in a logistics scenario, on animals in a husbandry farm scenario, on users or user items, or the like. In such scenarios, it is often necessary to locate the item where the zero-power terminal is located. In other words, at present, locating of zero-power terminals is of great importance.

### SUMMARY

Embodiments of the disclosure provide a wireless communication method and a device, so as to locate a terminal device, and then the position of the item, to which the terminal device is attached, may be located.

In a first aspect, a wireless communication method is provided. The method includes the following operations. A terminal device determines locating information of the terminal device according to a first signal; and the terminal device reports the locating information. Here, the first signal is configured to supply energy to the terminal device.

In a second aspect, a wireless communication method is provided. The method includes the following operation. A first network device sends a first signal to a terminal device. Here, the first signal is configured to supply energy to the terminal device and to determine locating information of the terminal device.

In a third aspect, a wireless communication method is provided. The method includes the following operation. A second network device receives locating information or position information of a terminal device. Here, the locating information is determined according to a first signal, the locating information is configured to determine the position information of the terminal device, and the first signal is configured to supply energy to the terminal device.

In a fourth aspect, a terminal device is provided, and the terminal device includes a processing unit and a communication unit. The processing unit is configured to determine locating information of the terminal device according to a first signal; and the communication unit is configured to report the locating information. Here, the first signal is configured to supply energy to the terminal device.

In a fifth aspect, a network device is provided. The network device is a first network device, and the network device includes a communication unit. The communication unit is configured to send a first signal to a terminal device. Here, the first signal is configured to supply energy to the terminal device and to determine locating information of the terminal device.

In a sixth aspect, a network device is provided. The network device is a second network device, and the network device includes a communication unit. The communication unit is configured to receive locating information or position information of a terminal device. Here, the locating information is determined according to a first signal, the locating information is configured to determine the position information of the terminal device, and the first signal is configured to supply energy to the terminal device.

In a seventh aspect, a terminal device is provided, and the terminal device includes a processor and a memory. The memory is configured to store a computer program, and the processor is configured to call and run the computer program stored in the memory, to execute the method in the first aspect or each implementation mode thereof.

In an eighth aspect, a network device is provided, and the network device includes a processor and a memory. The memory is configured to store a computer program, and the processor is configured to call and run the computer program stored in the memory, to execute the method in the second aspect or the third aspect, or each implementation mode thereof.

In a ninth aspect, an apparatus is provided to implement the method in any aspect of the first aspect to the third aspect, or each implementation mode thereof.

Specifically, the apparatus includes a processor, and the processor is configured to call and run a computer program in a memory to enable a device installed with the apparatus to execute the method in any aspect of the first aspect to the third aspect, or each implementation mode thereof.

In a tenth aspect, a computer-readable storage medium is provided. The computer-readable storage medium is configured to store a computer program, and the computer program enables a computer to execute the method in any aspect of the first aspect to the third aspect, or each implementation mode thereof.

In an eleventh aspect, a computer program product is provided. The computer program product includes computer program instructions, and the computer program instructions enable a computer to execute the method in any aspect of the first aspect to the third aspect, or each implementation mode thereof.

In a twelfth aspect, a computer program is provided. When run on a computer, the computer program enables the computer to execute the method in any aspect of the first aspect to the third aspect, or each implementation mode thereof.

With the technical solutions of the disclosure, the terminal device may determine the locating information of the terminal device based on the first signal, and report the locating information, such that the network side may locate the terminal device according to the locating information, and then locate the position of the item to which the terminal device is attached.

### BRIEF DESCRIPTION OF THE DRAWINGS

FIG. 1 is a schematic diagram of a communication system architecture provided by an embodiment of the disclosure.
FIG. 2 is a schematic diagram of a zero-power communication system provided by the disclosure.
FIG. 3 is a principle diagram of back scattering communication provided by the disclosure.
FIG. 4 is a principle diagram of energy collection provided by an embodiment of the disclosure.
FIG. 5 is a circuit principle diagram of resistive load modulation provided by an embodiment of the disclosure.
FIG. 6 is a schematic diagram of a communication system provided by an embodiment of the disclosure.
FIG. 7 is a flowchart of a wireless communication method provided by an embodiment of the disclosure.
FIG. 8 is a schematic diagram of a communication system provided by an embodiment of the disclosure.
FIG. 9 is a schematic diagram of another communication system provided by an embodiment of the disclosure.
FIG. 10 is a schematic diagram of another communication system provided by an embodiment of the disclosure.
FIG. 11 is a schematic diagram of another communication system provided by an embodiment of the disclosure.
FIG. 12 illustrates a schematic block diagram of a terminal device 1200 according to an embodiment of the disclosure.
FIG. 13 illustrates a schematic block diagram of a network device 1300 according to an embodiment of the disclosure.
FIG. 14 illustrates a schematic block diagram of a network device 1400 according to an embodiment of the disclosure.
FIG. 15 is a schematic structural diagram of a communication device 1500 provided by an embodiment of the disclosure.
FIG. 16 is a schematic structural diagram of an apparatus of an embodiment of the disclosure.

### DETAILED DESCRIPTION

The technical solutions in the embodiments of the disclosure will be described below in conjunction with the drawings in the embodiments of the disclosure. It is apparent that the described embodiments are a part of the embodiments of the disclosure and not all of the embodiments. For the embodiments of the disclosure, all other embodiments obtained by those of ordinary skill in the art without making creative labor fall within the scope of protection of the disclosure.

It is to be understood that the terms "system" and "network" may often be used interchangeably herein. The term "and/or" herein is only a description of an association relationship of associated objects, representing that there may be three kinds of relationships. For example, A and/or B may represent three conditions: i.e., independent existence of A, existence of both A and B and independent existence of B. In addition, the character "j" herein usually represents that the previous and next associated objects are in an "or" relationship.

In the description of the embodiments of the disclosure, the term "corresponding" may represent a direct or indirect correspondence between the two, or may represent an associated relationship between the two, or a relationship between indicating and being indicated, configuring and being configured, or the like.

The embodiments of the disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Universal Mobile Telecommunications System (UMTS), a Wireless Local Area Network (WLAN), a Wireless Fidelity (WiFi), a next generation communication system, a zero-power communication system, a cellular IoT, a cellular passive IoT, or other communication systems.

Here, the cellular IoT is a development product of a combination of a cellular mobile communication network and an IoT. The cellular passive IoT, also referred to as a passive cellular IoT, is a combination of a network device and a passive terminal. In a cellular passive IoT, a passive terminal may communicate with other passive terminals through a network device, or, a passive terminal may communicate by using a Device to Device (D2D) communication manner. The network device only needs to send a carrier signal, i.e., an energy supply signal, to supply energy to the passive terminal.

In general, traditional communication systems support a limited number of connections and are easy to implement. However, with the development of the communication technology, mobile communication systems will not only support traditional communication, but also support, for example, D2D communication, Machine to Machine (M2M) communication, Machine Type Communication (MTC), Vehicle to Vehicle (V2V) communication, or the like. The embodiments of the disclosure may also be applied to such communication systems.

Optionally, the communication system in the embodiments of the disclosure may be applied to a Carrier Aggregation (CA) scenario, a Dual Connectivity (DC) scenario, or a Standalone (SA) network deployment scenario.

The applied spectrum is not limited by the embodiments of the disclosure. For example, the embodiments of the disclosure may be applied to an licensed spectrum, or may be applied to an unlicensed spectrum.

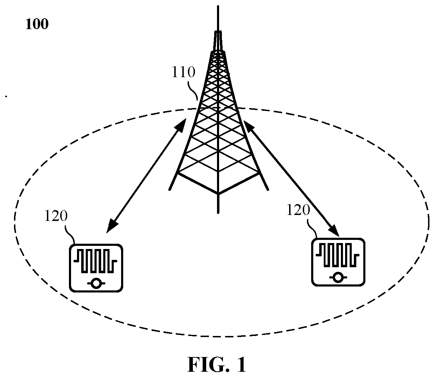

Exemplarily, a communication system 100, to which an embodiment of the disclosure is applied, is shown in FIG. 1. The communication system 100 may include a network device 110, and the network device 110 may be a device that communicates with a terminal device 120 (or referred to as a communication terminal or terminal). The network device 110 may provide communication coverage for a specific geographic area and may communicate with a terminal device located within the coverage area.

FIG. 1 exemplarily illustrates a network device and two terminal devices. Optionally, the communication system 100 may include multiple network devices, and other numbers of terminal devices may be included within the coverage area of each network device, which is not limited by the embodiments of the disclosure.

Optionally, the communication system 100 may further include other network entities, such as a network controller or a mobile management entity, which is not limited by the embodiments of the disclosure.

It is to be understood that devices in the network/system in the embodiments of the disclosure, which have a communication function, may be referred to as communication devices. Taking the communication system 100 shown in FIG. 1 as an example, the communication devices may include a network device 110 and a terminal device 120 which have a communication function. The network device 110 and the terminal device 120 may be the specific devices described above, which will not be repeated here. The communication devices may further include other devices in the communication system 100, such as a network controller, a mobile management entity, or other network entities, which is not limited by the embodiments of the disclosure.

The embodiments of the disclosure describe various embodiments in combination with the terminal device and network device. Here, the network device may be a device for communicating with a mobile device. The network device may be an Access Point (AP) in the WLAN, a Base Transceiver Station (BTS) in the GSM or CDMA, a NodeB (NB) in the WCDMA, an Evolutional Node B (eNB or eNodeB) in the LTE, a relay station or an AP, an on-board device or a wearable device, a network device (gNB) in an NR network or a network device in a future evolved PLMN network, or the like.

In the embodiments of the disclosure, the network device provides services for a cell, and the terminal device communicates with the network device through the transmission resources (such as frequency domain resources, which are also called spectrum resources) used by the cell. The cell may be a cell corresponding to the network device (for example, the base station), and the cell may belong to a macro base station or a base station corresponding to a small cell. The small cell may include a Metro cell, a Micro cell, a Pico cell, a Femto cell, or the like. These small cells have characteristics of small coverage and low transmit power, which are suitable for providing services of high-speed data transmission.

In the embodiments of the disclosure, the terminal device may also be referred to as a User Equipment (UE), an access terminal, a user unit, a user station, a mobile station, a remote station, a remote terminal, a mobile device, a user terminal, a terminal, a wireless communication device, a user agent, a user apparatus, or the like. The terminal device may be a station (ST) in the WLAN, a cellular telephone, a cordless telephone, a Session Initiation Protocol (SIP) telephone, a Wireless Local Loop (WLL) station, a Personal Digital Processing (PDA) device, a handheld device having a wireless communication function, a computing device or other processing devices connected to a wireless modem, an on-board device, a wearable device, a terminal device in a next generation communication system, such as a terminal device in an NR network, or a terminal device in a future evolved Public Land Mobile Network (PLMN), or a zero-power terminal, or the like.

As an example rather than a limitation, in the embodiments of the disclosure, the terminal device may also be a wearable device. The wearable device may also be referred to as a wearable smart device, which is a general name of the wearable devices developed by intelligently designing for daily wears with a wearable technology, such as glasses, gloves, watches, clothing, shoes, or the like. The wearable device is a portable device that is worn directly on the body or integrated into the user's clothes or accessories. The wearable device is not only a hardware device, but also a device realizing powerful functions through software support, data interaction and cloud interaction. Generalized wearable smart devices include devices (such as smart watches or smart glasses) with full functions and large size, which may implement complete or partial functions without relying on a smartphone, and devices (such as various smart bracelets and smart jewelries for monitoring physical signs) which only focus on a certain application function, and are required to be used in conjunction with other devices (such as a smartphone).

In the embodiments of the disclosure, the terminal device requires other devices, such as a network device, to supply energy. Therefore, in the embodiments of the disclosure, the terminal device may be a zero-power terminal, and of course, may also be any other terminal device that needs to be supplied with energy, which is not limited by the disclosure.

Exemplarily, in a zero-power communication system, the terminal device is mainly supplied with energy by a network device. The related technology of the zero-power communication technology will be described below.

### 1. Classification of zero-power terminals

Zero-power terminals may be classified into the following types based on the energy source and the way of use.

### (1) Passive zero-power terminals

A passive zero-power terminal does not need a built-in battery. When a passive zero-power terminal is close to a network device, the passive zero-power terminal is located in the near-field range formed by the antenna radiation of the network device. Therefore, the antenna of the passive zero-power terminal generates an induced current by electromagnetic induction, and the induced current drives the low-power chip circuit of the passive zero-power terminal, so as to realize signal demodulation of the forward link and signal modulation of the back scattering link. For the back scattering link, the passive zero-power terminal performs signal transmission in a back scattering realization manner.

It can be seen that, whether for the forward link or the back scattering link, the passive zero-power terminal does not need a built-in battery to drive the low-power chip circuit, and such kind of terminal is a kind of zero-power terminal in the true sense.

In addition, the RF circuit and baseband circuit of the passive zero-power terminal are very simple. For example, a passive zero-power terminal does not need components such as a Low Noise Amplifier (LNA), a Power Amplifier (PA), a crystal oscillator, an Analog-to-Digital Converter (ADC), or the like. Therefore, the passive zero-power terminal has many advantages, such as a small size, light weight, very cheap price, long service life, and so on.

### (2) Semi-passive zero-power terminals

A semi-passive zero-power terminal itself is not installed with conventional batteries, but it may use RF energy collection module to collect radio energy, and store the collected energy in an energy storage unit, such as a capacitor. After the energy storage unit obtains energy, the energy storage unit may drive the low-power chip circuit of the semi-passive zero-power terminal, so as to realize demodulation of the forward link signals and signal modulation of the back scattering link. For the back scattering link, the semi-passive zero-power terminal performs signal transmission in a back scattering realization manner.

It can be seen that, whether for the forward link or the back scattering link, the semi-passive zero-power terminal does not need a built-in battery to drive the low-power chip circuit. Although the semi-passive zero-power terminal has an energy storage unit for energy storage, the energy still comes from the radio energy collected by the RF energy collection module. Therefore, the semi-passive zero-power terminal is also a kind of zero-power terminal in the true sense.

In addition, the semi-passive zero-power terminal inherits many advantages of the passive zero-power terminal. Therefore, the semi-passive zero-power terminal has many advantages, such as a small size, light weight, very cheap price, long service life, and so on.

### (3) Active zero-power terminals

The zero-power terminal used in some scenarios may also be an active zero-power terminal. The active zero-power terminal may have a built-in battery, and the battery is used to drive the low-power chip circuit of the zero-power terminal, so as to realize demodulation of the forward link signals and signal modulation of the back scattering link. However, for the back scattering link, such kind of terminal may perform signal transmission in a back scattering realization manner. Therefore, the "zero-power" of such kind of terminal is mainly reflected in that signal transmission of the back scattering link does not consume the terminal's own power, but in a back scattering manner.

The built-in battery of the active zero-power terminal may supply power to the low-power chip circuit, so as to increase the reading and writing distance of the active zero-power terminal and to improve the reliability of communication. Therefore, the active zero-power terminal may be applied in some scenarios with relatively high requirements for communication distance or reading delay.

### 2. The principle of the zero-power communication technology

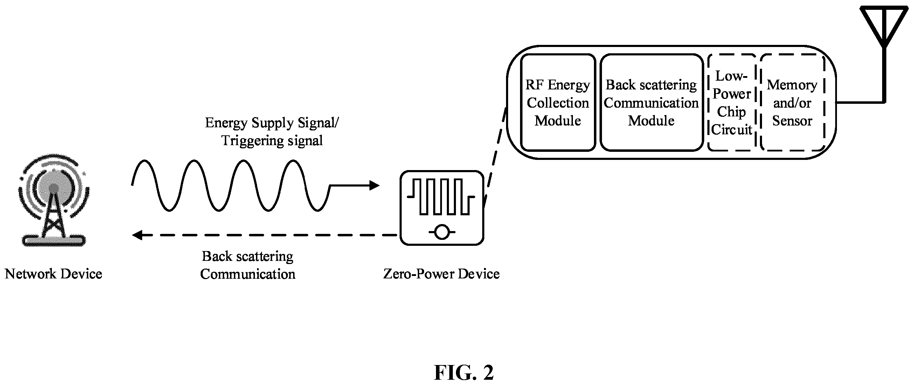

The zero-power communication uses energy collection and back scattering communication technology. A zero-power communication network consists of a network device and a zero-power terminal. As shown in FIG. 2, the zero-power terminal may be the above-mentioned semi-passive zero-power terminal. The network device is configured to send energy supply signals and downlink communication signals to the zero-power terminal, and receive back scattering signals from the zero-power terminal. The zero-power terminal may include an RF energy collection module, a back scattering communication module, and a low-power chip circuit. In addition, the zero-power terminal may further have a memory for storing some basic information (for example, an item identifier, or the like), and may further include a sensor for obtaining sensing data such as the ambient temperature, the ambient humidity, or the like.

In the embodiments of the disclosure, the energy supply signal is configured to supply energy to the zero-power terminal to trigger the zero-power terminal to operate, and thus the energy supply signal is also referred to as a triggering signal. Alternatively, the energy supply signal is also referred to as a carrier signal.

The key technologies of zero-power communication mainly include wireless RF energy collection and back scattering communication.

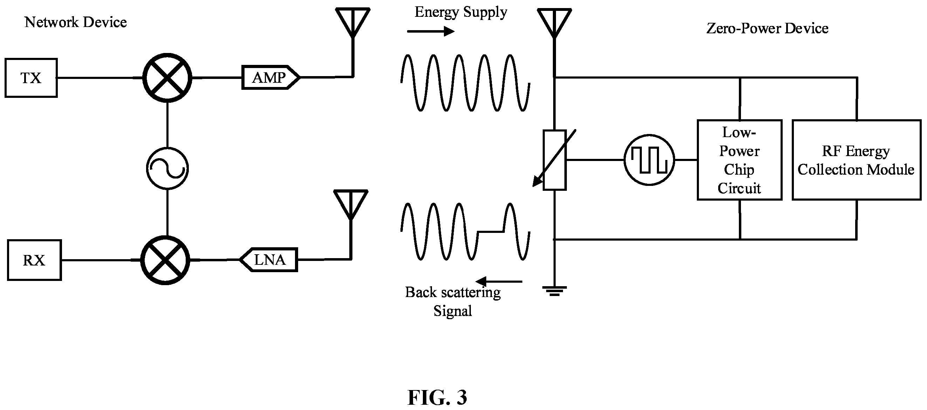

As shown in FIG. 3, the zero-power terminal receives the energy supply signal sent by the network device, collects energy by the RF energy collection module, and then supplies energy to the low-power chip circuit, modulates the energy supply signal, and performs back scatteringing. The main features are as follows.
(1) The zero-power terminal does not actively transmit signals, and realizes back scattering communication by modulating the energy supply signal.
(2) The zero-power terminal does not rely on conventional active amplifier transmitters, and uses the low-power chip circuit, which greatly reduces hardware complexity.
(3) Battery-free communication may be realized in combination with energy collection.

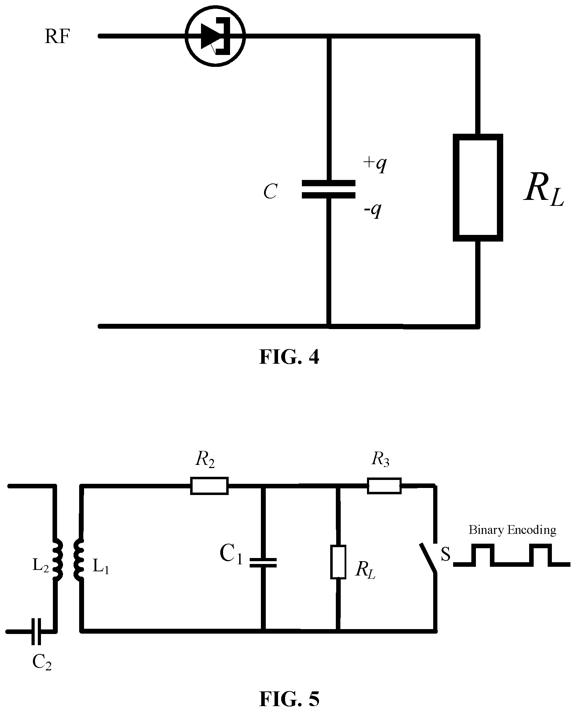

As shown in FIG. 4, the zero-power terminal may use the RF energy collection module to realize the collection of space electromagnetic wave energy by electromagnetic induction, and then realize the driving for the low-power chip circuit, the sensor, or the like.

Load modulation is a method which is often used by the zero-power terminal to transmit data to the network device. Load modulation is accomplished by adjusting the electrical parameters of the oscillation circuit of the zero-power terminal according to the beat of the data flow, such that the value and phase of the impedance of the zero-power terminal are changed accordingly. Load modulation technology mainly includes resistive load modulation and capacitive load modulation.

In the resistive load modulation, the load is connected in parallel with a resistor which is called a load modulation resistor. The resistor is on and off according to the clock of the data flow, and the switch S is controlled to be on and off by binary data encoding. The circuit principle of the resistive load modulation is shown in FIG. 5.

In the capacitive load modulation, the load is connected in parallel with a capacitor, which replaces the load modulation resistor controlled by binary data encoding in FIG. 5.

The data transmitted by the zero-power terminal may be represented as binary "1" and "0" in different forms of codes. A radio frequency identification system generally use one of reverse Non Return Zero (NRZ) coding, Manchester coding, Unipolar Return Zero (Unipolar RZ) coding, differential biphasic (DBP) coding, Miller coding, and differential coding. Generally speaking, 0 and 1 are represented by different pulse signals.

As mentioned above, at present, there are high requirements on power consumption of terminal devices in multiple communication industries. Based on this, the application of zero-power terminals has become a key technology in multiple communication industries. A zero-power terminal may be applied in various scenarios. For example, a zero-power terminal may be set on goods in a logistics scenario, on animals in a husbandry farm scenario, on users or user items, or the like. In such scenarios, it is often necessary to locate the item where the zero-power terminal is located. In other words, at present, locating of zero-power terminals is of great importance.

In order to solve the above technical problem, in an embodiment of the disclosure, a terminal device may determine locating information of the terminal device based on a first signal, and the first signal is configured to supply energy to the terminal device.

It is to be understood that the technical solutions of the disclosure may be applied to the following scenarios, but is not limited thereto.

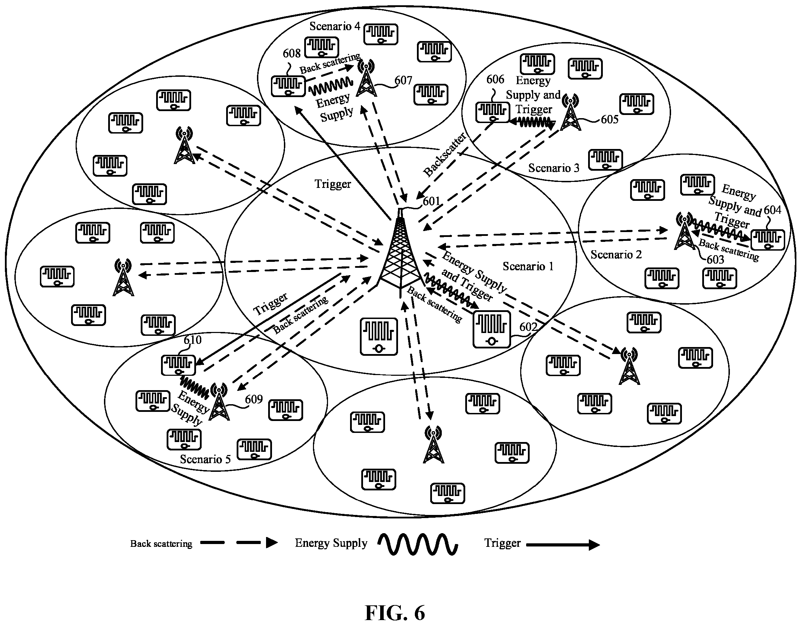

FIG. 6 is a schematic diagram of a communication system provided by an embodiment of the disclosure. In a first scenario, as shown in FIG. 6, the network device 601 may supply energy to the terminal device 602, and may further trigger the terminal device 602 to report its own locating information. The terminal device 602 may report its own locating information to the network device 601 in a back scattering manner, to enable the network device 601 to determine the position information of the terminal device 602 according to the locating information.

In a second scenario, as shown in FIG. 6, the network device 603 may supply energy to the terminal device 604, and may further trigger the terminal device 602 to report its own locating information. The terminal device 604 may report its own locating information to the network device 603 in a back scattering manner. The network device 603 may feed the locating information back to the network device 601, to enable the network device 601 to determine the position information of the terminal device 604 according to the locating information. Alternatively, the network device 603 determines the position information of the terminal device 604 according to the locating information, and feeds the position information back to the network device 601.

In a third scenario, as shown in FIG. 6, the network device 605 may supply energy to the terminal device 606, and may further trigger the terminal device 606 to report its own locating information. The terminal device 606 may report its own locating information to the network device 601 in a back scattering manner, and the network device 601 may determine the position information of the terminal device 606 according to the locating information.

In a fourth scenario, as shown in FIG. 6, the network device 607 may supply energy to the terminal device 608, and the network device 601 may trigger the terminal device 608 to report its own locating information. The terminal device 608 may report its own locating information to the network device 607 in a back scattering manner, and the network device 607 may feed the locating information back to the network device 601, to enable the network device 601 to determine the position information of the terminal device 608 according to the locating information. Alternatively, the network device 607 determines the position information of the terminal device 608 according to the locating information and feeds the position information back to the network device 601.

In a fifth scenario, as shown in FIG. 6, the network device 609 may supply energy to the terminal device 610, the network device 601 may trigger the terminal device 608 to report its own locating information, and the terminal device 610 may report its own locating information to the network device 601 in a back scattering manner. In other words, in scenario 5, the network device 609 only plays the role of energy supply.

The technical solutions of the disclosure will be described in detail below.

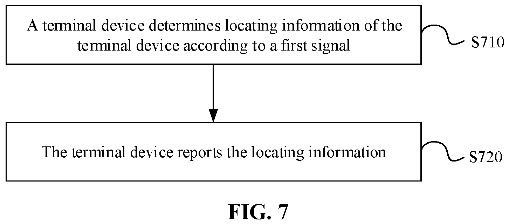

FIG. 7 is a flowchart of a wireless communication method provided by an embodiment of the disclosure. As shown in FIG. 7, the method includes the following operations.

In operation S710, a terminal device determines locating information of the terminal device according to a first signal.

In operation S720, the terminal device reports the locating information.

It is to be noted that in the embodiments of the disclosure, the first signal, which is configured to supply energy to the terminal device, may only play the role of energy supply, in which case the first signal is also referred to as an energy supply signal. Alternatively, in a case where the first signal may further trigger the terminal device to report its own locating information, the first signal is not only an energy supply signal, and the first signal may be considered as a special kind of energy supply signal, for example, an energy supply signal with a triggering function. For example, the first signal may be transmitted on a specific resource to indicate that it is a special energy supply signal in such an implicit way.

In some possible implemenations, the first signal corresponds to at least one of transmit power of the first signal or spatial information of the first signal. For example, the first signal, an associated signal of the first signal, or an associated channel of the first signal carries at least one of a first identifier of the first signal or a second identifier of the first signal. Alternatively, the first signal, an associated signal of the first signal, or an associated channel of the first signal implicitly carries at least one of the first identifier or the second identifier. Alternatively, the first signal, an associated signal of the first signal, or an associated channel of the first signal explicitly or implicitly carries a third identifier of the first signal.

In some possible implemenations, the first identifier is associated with the transmit power of the first signal, and the second identifier corresponds to the spatial information of the first signal.

In some possible implemenations, the third identifier is associated with the transmit power of the first signal, and/or, the third identifier corresponds to the spatial information of the first signal.

In some possible implemenations, the locating information includes at least one of the first identifier of the first signal or the second identifier of the first signal, but is not limited thereto.

In some possible implemenations, the locating information may also not carry at least one of the first identifier or the second identifier, but rather represent at least one of the first identifier or the second identifier implicitly. For example, the locating information may be sent in at least one of a specific time domain, frequency domain or code domain, to represent at least one of the first identifier or the second identifier.

It is to be understood that the first identifier being associated with the transmit power of the first signal may be understood as follows. The first identifier is configured to identify the transmit power of the first signal, or the first identifier is configured to identify a power transmission range corresponding to the transmit power. The power transmission range is also referred to as a power transmission region, a power transmission radius, a transmit power radius, a transmit power range, a transmit power region, or the like, which is not limited by the disclosure.

It is to be understood that the second identifier of the first signal corresponding to the spatial information of the first signal may be understood as the second identifier is configured to identify the spatial information of the first signal.

In some possible implemenations, the spatial information of the first signal includes at least one of an angle, a coordinate, or a direction of the first signal, but is not limited thereto.

It is to be understood that in a case where the first signal has spatial information, it is indicated that the first signal is a regional signal.

In some possible implemenations, a first network device may send multiple signals, the multiple signals are configured to supply energy, and the multiple signals include the first signal.

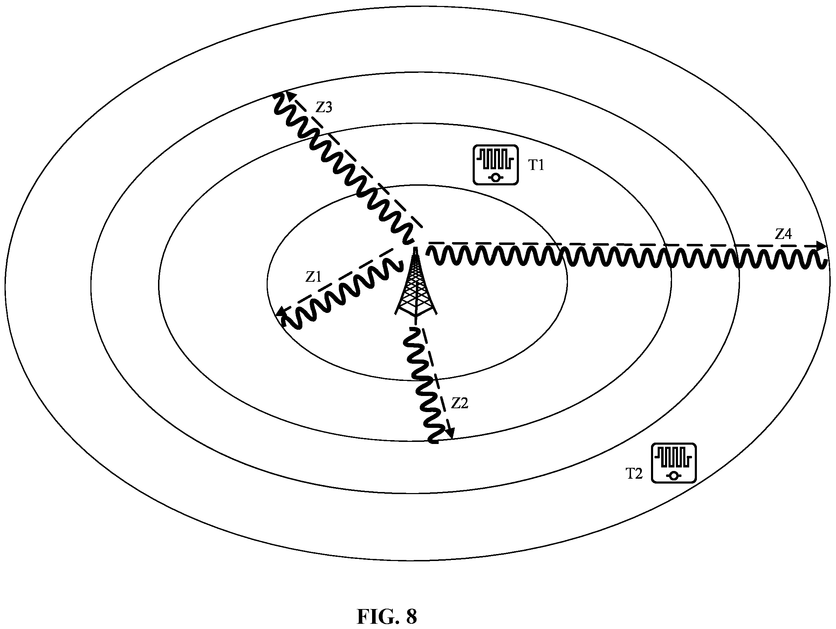

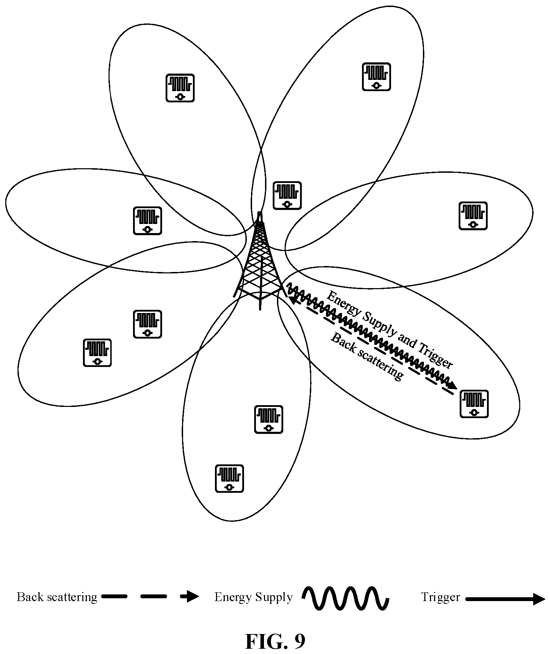

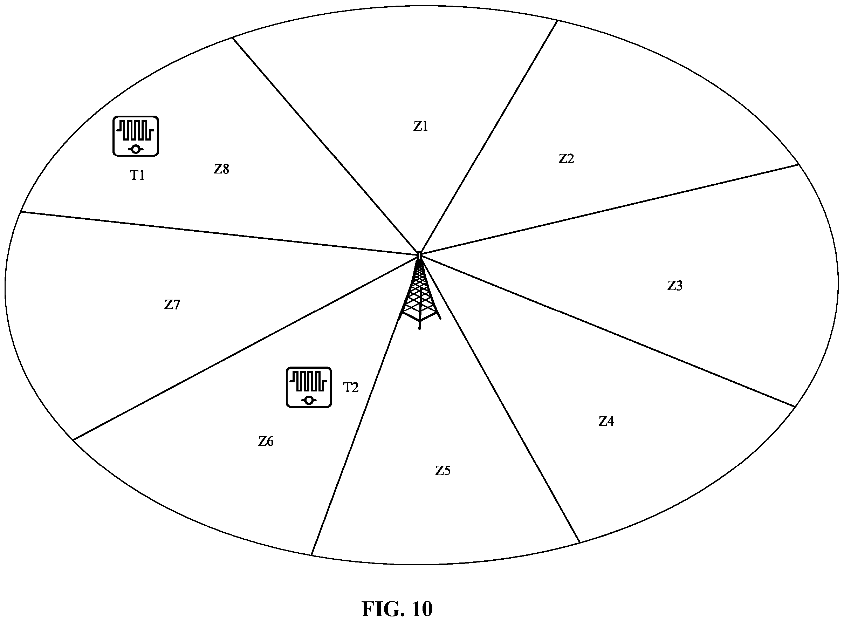

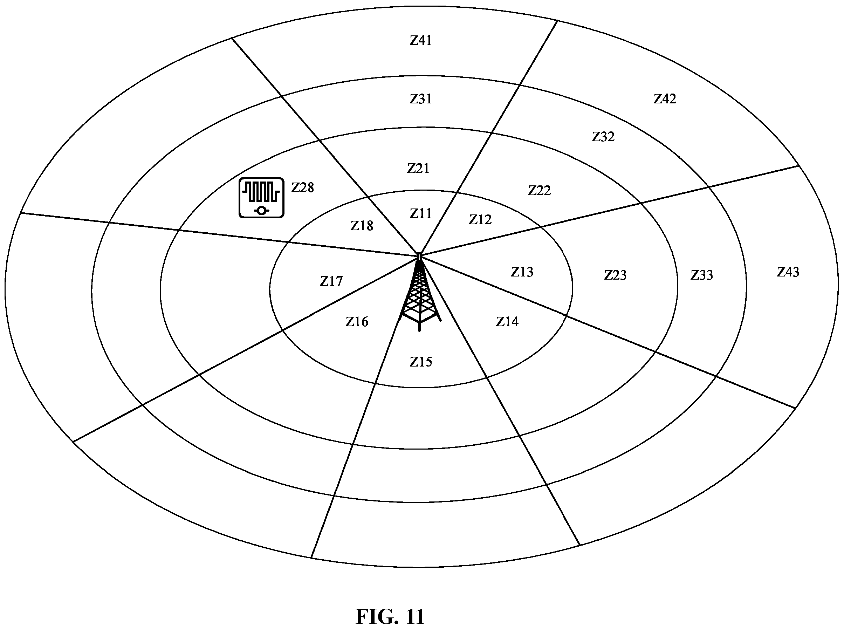

In some possible implemenations, any two signals of the multiple signals correspond to at least one of different transmit power or different spatial information. For example, as shown in FIG. 8, the power transmission ranges of signals 1 to 4 are Z1, Z2, Z3, and Z4, respectively, which are all different, that is, signals 1 to 4 have different transmit power. As shown in FIG. 9, each ellipse represents an transmission direction region of a signal, and at least one of the directions, angles, or coordinates of the transmission direction regions are different. Similarly, as shown in FIG. 10, the transmission direction regions Z1 to Z8 of signals 1 to 8 are all different. As shown in FIG. 11, a number of regions Zij may be defined, where i takes the value of 1-4, representing the transmit power from low to high, and y takes the value of 1-8, representing different transmission direction regions. Exemplarily, Z18 and Z28 have the same transmission direction region but correspond to different transmit power. Z18 and Z11 have different transmission direction regions but correspond to the same transmit power. Z18 and Z21 have different transmission direction regions and correspond to different transmit power.

In some possible implemenations, if the above multiple signals have different transmit power, the signals are sent in an order of transmit power from low to high, or in a descending order of transmit power, which is not limited by the disclosure.

In some possible implemenations, if there are signals having different transmit power in the above multiple signals, the signals are sent in an order of transmit power from low to high, or in a descending order of transmit power, which is not limited by the disclosure.

In some possible implemenations, at a certain transmit power, the first network device may send regional signals in different time or simultaneously, which is not limited by the disclosure.

It is to be understood that in the embodiments of the disclosure, at least one of the number of the multiple signals, the respective corresponding transmission direction regions, or the respective corresponding transmit power may be set according to locating requirements. In short, the number of the multiple signals, the respective corresponding transmission direction regions, or the respective corresponding transmit power are not limited by the disclosure.

In some possible implemenations, the multiple signals are sent in different time or simultaneously. For example, the first network device may send the signals in different time in a scanning manner, or send the signals simultaneously.

In some possible implemenations, the sending manner of the multiple signals may be configured by a second network device or the first network device, which is not limited by the disclosure.

In some possible implemenations, any two signals of the multiple signals correspond to at least one of different frequency domain resources or different code domain resources. For example, in a case where the multiple signals are sent simultaneously, any two signals of the multiple signals correspond to at least one of different frequency domain resources or different code domain resources. Alternatively, in a case where the multiple signals are sent in different time, any two signals of the multiple signals correspond to at least one of different frequency domain resources or different code domain resources.

In some possible implemenations, the second network device sends second control information to the first network device. The second control information is configured to control the first network device to send the first signal, and the second network device has an association relationship with the first network device.

In some possible implemenations, the second network device is a device for controlling the first network device, and the second network device may control more network devices. For example, as shown in FIG. 6, sending of the first signals of the network device 603, the network device 605, and the network device 607 may all be controlled by the network device 601.

Exemplarily, in scenario 2 as shown in FIG. 6, the network device 601 may send the second control information to the network device 603 to control the network device 603 to send the first signal. In scenario 3 as shown in FIG. 6, the network device 601 may send the second control information to the network device 605 to control the network device 605 to send the first signal. In scenario 4 as shown in FIG. 6, the network device 601 may send the second control information to the network device 607 to control the network device 607 to send the first signal. In scenario 5 as shown in FIG. 6, the network device 601 may send the second control information to the network device 609 to control the network device 609 to send the first signal.

In some possible implemenations, at least one of the first identifier or the second identifier is carried in any one of the first signal, a signal associated with the first signal, or a channel associated with the first signal.

It is to be understood that the signal associated with the first signal refers to a signal that has an association relationship with the first signal. For example, the signal is a signal that has at least one of the same time domain, frequency domain, or code domain resources as the first signal, which is not limited by the disclosure.

It is to be understood that the channel associated with the first signal refers to a channel that has an associative relationship with the first signal. For example, the channel may be a channel carrying the first signal, or an adjacent channel of the channel carrying the first signal, which is not limited by the disclosure.

In some possible implemenations, after the first network device obtains the locating information of the terminal device, the first network device may determine position information of the terminal device according to the locating information. Alternatively, the first network device may determine the position information of the terminal device according to the locating information and an association relationship of the multiple signals.

In some possible implemenations, in a case where the locating information includes the first identifier, the first network device determines the position information of the terminal device according to a first transmit power range and a second transmit power range. In a case where the locating information includes the second identifier, the first network device determines the position information of the terminal device according to the spatial information of the first signal. In a case where the locating information includes the first identifier and the second identifier, the first network device determines the position information of the terminal device according to the first transmit power range, the second transmit power range, and the spatial information. Here, the first transmit power range is the transmit power range of the first signal, and the second transmit power range is the transmit power range of the second signal. The second signal satisfies the following conditions, but is not limited thereto. The transmit power range of the second signal is smaller than the transmit power range of the first signal; the transmit power range of the second signal is adjacent to the transmit power range of the first signal; and second locating information of the terminal device, which is based on the second signal, is not received by the first network device.

It is to be understood that the above association relationship of the multiple signals may include an association relationship between the first signal and the second signal. Actually, in a case where the locating information includes the first identifier, or includes the first identifier and the second identifier, the first network device needs to determine the position information of the terminal device in combination with the locating information and the association relationship between the first signal and the second signal.

Exemplarily, as shown in FIG. 8, the network device sends four signals 1 to 4 with different transmit power, and the corresponding energy supply signals have coverage radii of Z1-Z4, respectively. When the network device sends the four signals, the network device determines the signal corresponding to the locating information by the locating information reported by the terminal device, and thereby determines that the terminal device is located within the coverage range corresponding to the signal. For example, as for terminal T1 in FIG. 8, in a case where the network device does not receive the locating information fed back by terminal T1 when sending signal 1 with a coverage radius of Z1, and receives the locating information fed back by terminal T1 when sending signal 2 with a coverage radius of Z2, the network device may determine that terminal T1 is located within an annular region with a distance between Z1 and Z2 from the network device. Similarly, terminal T2 is located within an annular region with a distance between Z3 and Z4 from the network device.

Exemplarily, as shown in FIG. 10, the network device sends different regional signals 1 to 8, with coverage radii of Z1 to Z8, respectively. In a case where terminal T1 is within coverage radius Z8 and feeds locating information back to the network device, the network device may determine that the region where terminal T1 is located is Z8. In a case where terminal T2 is within coverage radius Z6 and feeds locating information back to the network device, the network device may determine that the region where terminal T2 is located is Z6.

Exemplarily, as shown in FIG. 11, a number of regions Zij may be defined, where i takes the value of 1-4, representing the transmit power from low to high, and y takes the value of 1-8, representing different transmission direction regions. After receiving the locating information, the network device may determine the position information of the terminal device in combination with the relationship of the scanning order of the multiple signals, the power coverage ranges of the multiple signals, and the transmission direction regions of the multiple signals. For example, the multiple signals scan in an order of transmit power from low to high. In case of transmitting a signal with a transmit power index of 1, the signal in each direction do not activate the terminal device to feed its locating information back. In case of transmitting a signal with a transmit power index of 2 and a transmission direction region index of 8, the signal activates the terminal device to feed its locating information back. Based on this, the network device may determine that the terminal device is located in region Z28.

In some possible implemenations, after the first network device obtains the position information of the terminal device, the first network device may send the position information of the terminal device to the second network device.

Exemplarily, in scenario 2 shown in FIG. 6, after the network device 603 obtains the position information of the terminal device 604, the network device 603 may send the position information of the terminal device 604 to the network device 601. In scenario 4 shown in FIG. 6, after the network device 607 obtains the position information of the terminal device 608, the network device 607 may send the position information of the terminal device 608 to the network device 601.

In some possible implemenations, the terminal device may directly send its own locating information to the second network device.

Exemplarily, in scenario 3 shown in FIG. 6, the terminal device 606 may send its own locating information to the network device 601. In scenario 5 shown in FIG. 6, the terminal device 610 may send its own locating information to the network device 601.

In some possible implemenations, after the first network device obtains the locating information of the terminal device, the first network device may send the locating information of the terminal device to the second network device, to enable the second network device to determine the position information of the terminal device according to the locating information. Here, the method of determining the position information of the terminal device by the second network device may refer to the above method of determining the position information of the terminal device by the first network device, which will not be repeated in the disclosure.

Exemplarily, in scenario 2 shown in FIG. 6, after the network device 603 obtains the locating information of the terminal device 604, the network device 603 may send the locating information of the terminal device 604 to the network device 601, to enable the network device 601 to determine the position information of the terminal device 604 according to the locating information. In scenario 4 shown in FIG. 6, after the network device 607 obtains the locating information of the terminal device 608, the network device 607 may send the locating information of the terminal device 608 to the network device 601, to enable the network device 601 to determine the position information of the terminal device 608 according to the locating information.

It is to be noted that in the above possible implemenations, the locating information may include at least one of the first identifier or the second identifier. That is, the first identifier and the second identifier are two separate identifiers. Actually, the locating information may further be in the following forms, but is not limited thereto.

In some possible implemenations, the locating information includes a third identifier of the first signal.

In some possible implemenations, the third identifier is associated with the transmit power of the first signal, and/or, the third identifier corresponds to the spatial information of the first signal.

It is to be understood that in a case where the third identifier is associated with the transmit power of the first signal and corresponds to the spatial information of the first signal, it is indicated that the third identifier may identify both the transmit power of the first signal and the power transmission range corresponding to the transmit power, moreover, the spatial information of the first signal. In such case, the third identifier is a joint identifier relatively. Reference may be made to the above regarding the transmit power of the first signal and the spatial information of the first signal, which will not be repeated in the disclosure.

In some possible implemenations, the third identifier may be carried in any one of the first signal, a signal associated with the first signal, or a channel associated with the first signal, but is not limited thereto.

It is to be understood that reference may be made to the above regarding the signal associated with the first signal and the channel associated with the first signal, which will not be repeated in the disclosure.

It is to be understood that, as described above, the first signal for supplying energy to the terminal device may only play the role of energy supply. In such case, the first signal is also referred to as an energy supply signal, and the first network device or the second network device may send triggering information to the terminal device. Here, the triggering information is configured to trigger the terminal device to determine the locating information of the terminal device according to the first signal.

Exemplarily, in scenario 1 of FIG. 6, the network device 601 may send the triggering information to the terminal device 602 to trigger the terminal device 602 to determine its own locating information according to the first signal. In scenario 2 of FIG. 6, the network device 603 may send the triggering information to the terminal device 604 to trigger the terminal device 604 to determine its own locating information according to the first signal. In scenario 3 of FIG. 6, the network device 605 may send the triggering information to the terminal device 606 to trigger the terminal device 606 to determine its own locating information according to the first signal. In scenario 4 of FIG. 6, the network device 601 may send the triggering information to the terminal device 608 to trigger the terminal device 608 to determine its own locating information according to the first signal. In scenario 5 of FIG. 6, the network device 601 may send the triggering information to the terminal device 610 to trigger the terminal device 610 to determine its own locating information according to the first signal.

In some possible implemenations, the triggering information and the first signal are carried on the same frequency domain resource or different frequency domain resources, but are not limited thereto.

Exemplarily, the triggering information may be carried on a carrier where the first signal is located, for example, the carrier where the first signal is located is modulated to carry the triggering information. Alternatively, the triggering information may be carried on a channel or signal other than the first signal, and the terminal device may demodulate the channel or signal by energy supply of the first signal, so as to obtain the triggering information.

Exemplarily, in scenario 1 of FIG. 6, the triggering information and the first signal sent by the network device 601 to the terminal device 602 may be carried on the same frequency domain resource or different frequency domain resources. In scenario 2 of FIG. 6, the triggering information and the first signal sent by the network device 603 to the terminal device 604 may be carried on the same frequency domain resource or different frequency domain resources. In scenario 3 of FIG. 6, the triggering information and the first signal sent by the network device 605 to the terminal device 606 may be carried on the same frequency domain resource or different frequency domain resources.

In some possible implemenations, the triggering information includes at least one of a second type identifier, an identifier of the above terminal device, or an identifier of a terminal device group, but is not limited thereto. Here, the terminal device group includes the terminal device, and the identifier of the terminal device group is configured to identify the terminal device group. The second type identifier is configured to identify the information type of the triggering information.

In some possible implemenations, it can be known from the above definition of the triggering information that the triggering information is equivalent to requesting the terminal device to determine its own locating information, and thus the second type identifier may identify a request type.

It is to be understood that in the embodiments of the disclosure, the second type identifier may also be referred to as inquiry information, but is not limited thereto.

In some possible implemenations, in a case where the first network device or the second network device expects to obtain the respective locating information determined by all terminals under the coverage of the first network device or terminals in a specific region under the coverage of the first network device, the triggering information may not include the identifier of the terminal device or the identifier of the terminal device group, but only include the second type identifier. Of course, the triggering information may also not include the second type identifier, but represent the second type identifier implicitly. For example, the first network device or the second network device sends information on at least one of a specific frequency domain or code domain resource, and the terminal device determines that the information is triggering information as long as the terminal device recognizes the information on at least one of the specific frequency domain or code domain resource.

In some possible implemenations, in a case where the first network device or the second network device expects to obtain the locating information of a specific terminal or a specific terminal group, the triggering information may include at least one of the identifier of the terminal device or the identifier of the terminal device group, and may further include the second type identifier.

It is to be understood that any kind of information provided by the disclosure may also be referred to as a signal, a message, data, or the like. All of the information may be presented implicitly or explicitly, which is not limited by the disclosure.

In some possible implemenations, the second network device may send first control information to the first network device. The first control information is configured to control the first network device to send triggering information to the terminal device, in other words, the first network device may send the triggering information to the terminal device under the control of the second network device. Of course, the first network device may not be controlled by the second network device, but rather send the triggering information to the terminal device actively, which is not limited by the disclosure.

It is to be understood that there is a transmission interface for the first control information between the second network device and the first network device, and the second network device may send the first control information to the first network device through the interface.

Exemplarily, in scenario 2 shown in FIG. 6, the network device 601 may send the first control information to the network device 603 to control the network device 603 to send the triggering information to the terminal device 604. In scenario 3 shown in FIG. 6, the network device 601 may send the first control information to the network device 605 to control the network device 605 to send the triggering information to the terminal device 606.

In some possible implemenations, the first control information includes at least one of an identifier of the above terminal device or an identifier of a terminal device group, but is not limited thereto. Here, the terminal device group includes the terminal device, and the identifier of the terminal device group is configured to identify the terminal device group.

In some possible implemenations, in a case where the second network device expects to obtain the respective locating information determined by all terminals under the coverage of the first network device or terminals in a specific region under the coverage of the first network device, the first control information may not include the identifier of the terminal device or the identifier of the terminal device group.

In some possible implemenations, in a case where the second network device expects to obtain the locating information of a specific terminal or a specific terminal group, the first control information may include at least one of the identifier of the terminal device or the identifier of the terminal device group.

In some possible implemenations, the above locating information may be understood as a response to the triggering information, but is not limited thereto. Based on this, the locating information may include at least one of a first type identifier or an identifier of the terminal device, but is not limited thereto. Here, the first type identifier is configured to identify the information type of the locating information.

In some possible implemenations, the above locating information may be understood as a response to the triggering information, and thus the first type identifier may identify a kind of response type.

It is to be understood that in the embodiments of the disclosure, the first type identifier may also be referred to as determination information, but is not limited thereto.

In some possible implemenations, the identifier of the terminal device, which is carried by the locating information, is configured to identify that the locating information is locating information sent by the terminal device.

In summary, in the disclosure, the terminal device may determine the locating information of the terminal device based on the first signal, and report the locating information, such that the network side may realize locating of the terminal device according to the locating information, and then locate the position of the item to which the terminal device is attached.

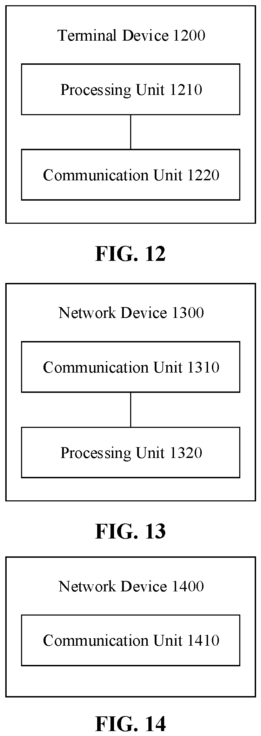

FIG. 12 illustrates a schematic block diagram of a terminal device 1200 according to an embodiment of the disclosure. The terminal device 1200 includes a processing unit 1210 and a communication unit 1220. The processing unit 1210 is configured to determine locating information of the terminal device according to a first signal, and the communication unit 1220 is configured to report the locating information. Here, the first signal is configured to supply energy to the terminal device.

In some possible implemenations, the first signal corresponds to at least one of transmit power of the first signal or spatial information of the first signal.

In some possible implemenations, the locating information includes at least one of a first identifier of the first signal or a second identifier of the first signal.

In some possible implemenations, the first identifier is associated with the transmit power of the first signal, and the second identifier corresponds to the spatial information of the first signal.

In some possible implemenations, the communication unit 1220 is further configured to obtain at least one of the first identifier or the second identifier.

In some possible implemenations, at least one of the first identifier or the second identifier is carried in any one of the first signal, a signal associated with the first signal, or a channel associated with the first signal.

In some possible implemenations, the locating information includes a third identifier of the first signal.

In some possible implemenations, the third identifier is associated with the transmit power of the first signal, and/or, the third identifier corresponds to the spatial information of the first signal.

In some possible implemenations, the communication unit 1220 is further configured to obtaining the third identifier.

In some possible implemenations, the third identifier is carried in any one of the first signal, a signal associated with the first signal, or a channel associated with the first signal.

In some possible implemenations, the locating information includes at least one of a first type identifier or an identifier of the terminal device. Here, the first type identifier is configured to identify the information type of the locating information.

In some possible implemenations, the communication unit 1220 is further configured to receive triggering information. The processing unit 1210 is specifically configured to determine, when triggered by the triggering information, the locating information according to the first signal.

In some possible implemenations, the triggering information and the first signal are carried on the same frequency domain resource or different frequency domain resources.

In some possible implemenations, the triggering information includes at least one of a second type identifier, an identifier of the terminal device, or an identifier of a terminal device group. Here, the terminal device group includes the terminal device, and the second type identifier is configured to identify the information type of the triggering information.

In some possible implemenations, the communication unit 1220 is specifically configured to report the locating information to a first network device or a second network device. Here, the first network device is a network device that generates the first signal, and the second network device has an association relationship with the first network device.

In some possible implemenations, the above communication unit may be a communication interface or a transceiver, or an input/output interface of a communication chip or a system-on-chip. The above processing unit may be one or more processors.

It is to be understood that the terminal device 1200 according to the embodiments of the disclosure may correspond to the terminal device in the method embodiments of the disclosure, and the aforementioned and other operations and/or functions of the various units in the terminal device 1200 are respectively for the purpose of realizing the corresponding flows of the terminal device in the method embodiments, which is not repeated here for the sake of brevity.

FIG. 13 illustrates a schematic block diagram of a network device 1300 according to an embodiment of the disclosure. The network device 1300 includes a communication unit 1310 configured to send a first signal to a terminal device. Here, the first signal is configured to supply energy to the terminal device and to determine locating information of the terminal device.

In some possible implemenations, the first signal corresponds to at least one of transmit power of the first signal or spatial information of the first signal.

In some possible implemenations, the locating information includes at least one of a first identifier of the first signal or a second identifier of the first signal.

In some possible implemenations, the first identifier is associated with the transmit power of the first signal, and the second identifier corresponds to the spatial information of the first signal.

In some possible implemenations, at least one of the first identifier or the second identifier is carried in any one of the first signal, a signal associated with the first signal, or a channel associated with the first signal.

In some possible implemenations, the locating information includes a third identifier of the first signal.

In some possible implemenations, the third identifier is associated with the transmit power of the first signal, and/or, the third identifier corresponds to the spatial information of the first signal.

In some possible implemenations, the third identifier is carried in any one of the first signal, a signal associated with the first signal, or a channel associated with the first signal.

In some possible implemenations, the locating information includes at least one of a first type identifier or an identifier of the terminal device. Here, the first type identifier is configured to identify the information type of the locating information.

In some possible implemenations, the communication unit 1310 is further configured to send triggering information to the terminal device. Here, the triggering information is configured to trigger the terminal device to determine the locating information according to the first signal.

In some possible implemenations, the triggering information and the first signal are carried on the same frequency domain resource or different frequency domain resources.

In some possible implemenations, the triggering information includes at least one of a second type identifier, an identifier of the terminal device, or an identifier of a terminal device group. Here, the terminal device group includes the terminal device, and the second type identifier is configured to identify the information type of the triggering information.

In some possible implemenations, the communication unit 1310 is further configured to receive first control information sent by a second network device. Here, the second network device has an association relationship with the first network device, and the first control information is configured to control the first network device to send the triggering information to the first terminal device.

In some possible implemenations, the communication unit 1310 is further configured to receive second control information sent by a second network device. Here, the second network device has an association relationship with the first network device, and the second control information is configured to control the first network device to send the first signal.

In some possible implemenations, the first network device sends multiple signals, the multiple signals are configured to supply energy, and the multiple signals include the first signal.

In some possible implemenations, any two signals of the multiple signals correspond to at least one of different transmit power or different spatial information.

In some possible implemenations, the multiple signals are sent in an order of transmit power from low to high.

In some possible implemenations, the multiple signals are sent in different time or simultaneously.

In some possible implemenations, any two signals of the multiple signals correspond to at least one of different frequency domain resources or different code domain resources.

In some possible implemenations, the network device 1300 further includes a processing unit 1320. Here, the communication unit 1310 is further configured to receive the locating information, and the processing unit 1320 is configured to determine position information of the terminal device according to the locating information.

In some possible implemenations, the processing unit 1320 is specifically configured to determine the position information of the terminal device according to the locating information and an association relationship of the multiple signals.

In some possible implemenations, the communication unit 1310 is further configured to send the position information of the terminal device to a second network device. Here, the second network device is a network device for controlling the first network device.

In some possible implemenations, the communication unit 1310 is further configured to send the locating information to a second network device. Here, the second network device has an association relationship with the first network device.

In some possible implemenations, the above communication unit may be a communication interface or a transceiver, or an input/output interface of a communication chip or a system-on-chip. The above processing unit may be one or more processors.

It is to be understood that the network device 1300 according to the embodiments of the disclosure may correspond to the first network device in the method embodiments of the disclosure, and the aforementioned and other operations and/or functions of the various units in the network device 1300 are respectively for the purpose of realizing the corresponding flows of the first network device in the method embodiments, which is not repeated here for the sake of brevity.

FIG. 14 illustrates a schematic block diagram of a network device 1400 according to an embodiment of the disclosure. The network device 1400 includes a communication unit 1410 configured to receive locating information or position information of a terminal device. Here, the locating information is determined according to a first signal, the locating information is configured to determine the position information of the terminal device, and the first signal is configured to supply energy to the terminal device.

In some possible implemenations, the first signal corresponds to at least one of transmit power of the first signal or spatial information of the first signal.

In some possible implemenations, the locating information includes at least one of a first identifier of the first signal or a second identifier of the first signal.

In some possible implemenations, the first identifier is associated with the transmit power of the first signal, and the second identifier corresponds to the spatial information of the first signal.

In some possible implemenations, at least one of the first identifier or the second identifier is carried in any one of the first signal, a signal associated with the first signal, or a channel associated with the first signal.

In some possible implemenations, the locating information includes a third identifier of the first signal.

In some possible implemenations, the third identifier is associated with the transmit power of the first signal, and/or, the third identifier corresponds to the spatial information of the first signal.

In some possible implemenations, the third identifier is carried in any one of the first signal, a signal associated with the first signal, or a channel associated with the first signal.

In some possible implemenations, the locating information includes at least one of a first type identifier or an identifier of the terminal device. Here, the first type identifier is configured to identify the information type of the locating information.

In some possible implemenations, the communication unit 1410 is further configured to send first control information to a first network device. Here, the first network device is a network device that generates the first signal, the first control information is configured to control the first network device to send triggering information to the terminal device, and the triggering information is configured to trigger the terminal device to determine the locating information according to the first signal.

In some possible implemenations, the communication unit 1410 is further configured to send second control information to a first network device. Here, the first network device is a network device that generates the first signal, and the second control information is configured to control the first network device to send the first signal.

In some possible implemenations, the above communication unit may be a communication interface or a transceiver, or an input/output interface of a communication chip or a system-on-chip.

It is to be understood that the network device 1400 according to the embodiments of the disclosure may correspond to the second network device in the method embodiments of the disclosure, and the aforementioned and other operations and/or functions of the various units in the network device 1400 are respectively for the purpose of realizing the corresponding flows of the second network device in the method embodiments, which is not repeated here for the sake of brevity.

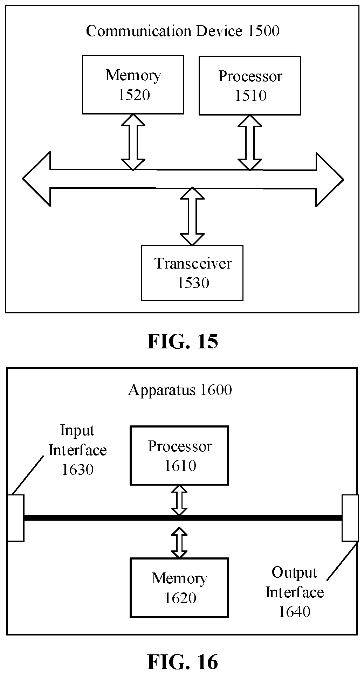

FIG. 15 is a schematic structural diagram of a communication device 1500 provided by an embodiment of the disclosure. The communication device 1500 shown in FIG. 15 includes a processor 1510, and the processor 1510 may call and run a computer program in a memory to implement the method in the embodiments of the disclosure.

Optionally, as shown in FIG. 15, the communication device 1500 may further include a memory 1520. The processor 1510 may call and run a computer program in the memory 1520 to implement the method in the embodiments of the disclosure.

The memory 1520 may be a separate component independent of the processor 1510, or may be integrated in the processor 1510.

Optionally, as shown in FIG. 15, the communication device 1500 may further include a transceiver 1530. The processor 1510 may control the transceiver 1530 to communicate with other devices, specifically, to send information or data to other devices, or to receive information or data sent by other devices.

The transceiver 1530 may include a transmitter and a receiver. The transceiver 1530 may further include an antenna. The number of the antennas may be one or more.

Optionally, the communication device 1500 may specifically be the network device of the embodiments of the disclosure, and the communication device 1500 may implement the corresponding flows implemented by the network device in each method of the embodiments of the disclosure, which is not repeated here for the sake of brevity.

Optionally, the communication device 1500 may specifically be the terminal device of the embodiments of the disclosure, and the communication device 1500 may implement the corresponding flows implemented by the terminal device in each method of the embodiments of the disclosure, which is not repeated here for the sake of brevity.

FIG. 16 is a schematic structural diagram of an apparatus of an embodiment of the disclosure. The apparatus 1600 shown in FIG. 16 includes a processor 1610. The processor 1610 may call and run a computer program in a memory to implement the method in the embodiments of the disclosure.

Optionally, as shown in FIG. 16, the apparatus 1600 may further include a memory 1620. The processor 1610 may call and run a computer program in the memory 1620 to implement the method in the embodiments of the disclosure.

The memory 1620 may be a separate component independent of the processor 1610, or may be integrated in the processor 1610.

Optionally, the apparatus 1600 may further include an input interface 1630. The processor 1610 may control the input interface 1630 to communicate with other devices or chips, specifically, to obtain information or data sent by other devices or chips.

Optionally, the apparatus 1600 may further include an output interface 1640. The processor 1610 may control the output interface 1640 to communicate with other devices or chips, specifically, to output information or data to other devices or chips.

Optionally, the apparatus may be applied to the network device in the embodiments of the disclosure, and the apparatus may implement the corresponding flows implemented by the network device in each method of the embodiments of the disclosure, which is not repeated here for the sake of brevity.

Optionally, the apparatus may be applied to the terminal device in the embodiments of the disclosure, and the apparatus may implement the corresponding flows implemented by the terminal device in each method of the embodiments of the disclosure, which is not repeated here for the sake of brevity.

Optionally, the apparatus referred to in the embodiments of the disclosure may also be a chip. For example, it may be a system-level chip, a system chip, a chip system, a system-on-chip, or the like.

It is to be understood that the processor in the embodiments of the disclosure may be an integrated circuit chip having signal processing capability. In the implementation process, various operations in the above method embodiments may be completed by a hardware integrated logic circuit or instructions in the form of software in the processor. The above processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. Various methods, operations and logic block diagrams disclosed in the embodiments of the disclosure may be implemented or executed. The general purpose processor may be a microprocessor, or the processor may be any conventional processor or the like. Operations in combination with methods disclosed in the embodiments of the disclosure may be directly embodied to be executed and completed by a hardware decoding processor, or by a combination of hardware and software modules in the decoding processor. The software module may be located in a mature storage medium in the art, such as a Random Access Memory, a flash memory, a Read-Only Memory, a Programmable Read-Only Memory, an Electrically Erasable Programmable Memory, a register, or the like. The storage medium is located in the memory, and the processor reads the information in the memory to complete the operations of the above methods in combination with its hardware.

It is to be understood that the memory in the embodiments of the disclosure may be a volatile memory or a non-volatile memory, or may include a volatile memory and a non-volatile memory. Here, the non-volatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), and is used as an external high-speed cache. It is exemplarily but unlimitedly illustrated that RAMs in various forms may be used, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) or a Direct Rambus RAM (DR RAM). It is to be noted that the memory of the systems and methods described herein is intended to include memories of these and any other proper types, but is not limited thereto.

It is to be understood that the above memory is exemplarily but unlimitedly illustrated. For example, the memory in the embodiments of the disclosure may further be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), or the like. That is, the memory in the embodiments of the disclosure is intended to include memories of these and any other proper types, but is not limited thereto.

An embodiment of the disclosure further provides a computer-readable storage medium, which is configured to store a computer program.

Optionally, the computer-readable storage medium may be applied to the network device or base station in the embodiments of the disclosure, and the computer program enables a computer to execute corresponding flows implemented by the network device or base station in each method of the embodiments of the disclosure, which is not repeated here for the sake of brevity.

Optionally, the computer-readable storage medium may be applied to the mobile terminal or terminal device in the embodiments of the disclosure, and the computer program enables a computer to execute corresponding flows implemented by the mobile terminal or terminal device in each method of the embodiments of the disclosure, which is not repeated here for the sake of brevity.

An embodiment of the disclosure further provides a computer program product, which includes computer program instructions.

Optionally, the computer program product may be applied to the network device or base station in the embodiments of the disclosure, and the computer program instructions enable a computer to execute corresponding flows implemented by the network device or base station in each method of the embodiments of the disclosure, which is not repeated here for the sake of brevity.

Optionally, the computer program product may be applied to the mobile terminal or terminal device in the embodiments of the disclosure, and the computer program instructions enable a computer to execute corresponding flows implemented by the mobile terminal or terminal device in each method of the embodiments of the disclosure, which is not repeated here for the sake of brevity.

An embodiment of the disclosure further provides a computer program.

Optionally, the computer program may be applied to the network device or base station in the embodiments of the disclosure, and when the computer program runs in a computer, the computer program enables the computer to execute corresponding flows implemented by the network device or base station in each method of the embodiments of the disclosure, which is not repeated here for the sake of brevity.

Optionally, the computer program may be applied to the mobile terminal or terminal device in the embodiments of the disclosure, and when the computer program runs in a computer, the computer program enables the computer to execute corresponding flows implemented by the mobile terminal or terminal device in each method of the embodiments of the disclosure, which is not repeated here for the sake of brevity.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by using different methods, but such realization shall fall within the scope of the disclosure.

Those skilled in the art may clearly understand that for convenient and brief description, specific operation processes of the systems, apparatuses and units described above may refer to the corresponding processes in the aforementioned method embodiments and will not be repeated here.

In several embodiments provided by the disclosure, it is to be understood that the disclosed systems, apparatuses and methods may be implemented in other manners. For example, the apparatus embodiments described above are only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between various displayed or discussed components may be indirect coupling or communication connection through some interfaces, apparatuses or units, and may be electrical, mechanical, or in other forms.

The units described as separate components may or may not be physically separated, and components displayed as units may or may not be physical units, that is, may be located in the same place, or may also be distributed to multiple network units. Part or all of the units may be selected according to a practical requirement to achieve the purpose of the solutions of the embodiments.

In addition, various functional units in various embodiments of the disclosure may be integrated into a processing unit, or each unit may physically exist independently, or two or more than two units may be integrated into a unit.

In case of being realized in form of a software functional unit and sold or used as an independent product, the functions may also be stored in a computer-readable storage medium. Based on such an understanding, the technical solutions of the disclosure substantially or parts making contributions to the related art or part of the technical solutions may be embodied in form of a software product, and the computer software product is stored in a storage medium, including several instructions configured to enable a computer device (which may be a personal computer, a server, a network device, or the like) to execute all or part of the operations of the methods in various embodiments of the disclosure. The abovementioned storage medium includes various media capable of storing program codes, such as a USB disk, a mobile hard disk, a Read-Only Memory (ROM), a Random Access Memory (RAM), a magnetic disk, an optical disk, or the like.

The above is only specific implementation modes of the disclosure, but the scope of protection of the disclosure is not limited thereto. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A wireless communication method, comprising:
determining, by a terminal device, locating information of the terminal device according to a first signal; and
reporting, by the terminal device, the locating information,
wherein the first signal is configured to supply energy to the terminal device.

2. The method of claim 1, wherein the first signal corresponds to at least one of transmit power of the first signal or spatial information of the first signal.

3. The method of claim 1 or 2, wherein the locating information comprises at least one of a first identifier of the first signal or a second identifier of the first signal.

4. The method of claim 3, wherein the first identifier is associated with transmit power of the first signal, and the second identifier corresponds to spatial information of the first signal.

5. The method of claim 3 or 4, further comprising:
obtaining, by the terminal device, at least one of the first identifier or the second identifier.

6. The method of claim 5, wherein at least one of the first identifier or the second identifier is carried in any one of the first signal, a signal associated with the first signal, or a channel associated with the first signal.

7. The method of claim 1 or 2, wherein the locating information comprises a third identifier of the first signal.

8. The method of claim 7, wherein the third identifier is associated with transmit power of the first signal, and/or, the third identifier corresponds to spatial information of the first signal.

9. The method of claim 8, further comprising:
obtaining, by the terminal device, the third identifier.

10. The method of claim 9, wherein the third identifier is carried in any one of the first signal, a signal associated with the first signal, or a channel associated with the first signal.

11. The method of any one of claims 1-10, wherein the locating information comprises at least one of a first type identifier or an identifier of the terminal device;
wherein the first type identifier is configured to identify an information type of the locating information.

12. The method of any one of claims 1-11, further comprising:
receiving, by the terminal device, triggering information;
wherein the determining, by the terminal device, the locating information of the terminal device according to the first signal comprises:
determining, by the terminal device when triggered by the triggering information, the locating information according to the first signal.

13. The method of claim 12, wherein the triggering information and the first signal are carried on a same frequency domain resource or different frequency domain resources.

14. The method of claim 12 or 13, wherein the triggering information comprises at least one of a second type identifier, an identifier of the terminal device, or an identifier of a terminal device group;
wherein the terminal device group comprises the terminal device, and the second type identifier is configured to identify an information type of the triggering information.

15. The method of any one of claims 1-14, wherein the reporting, by the terminal device, the locating information comprises:
reporting, by the terminal device, the locating information to a first network device or a second network device;
wherein the first network device is a network device that generates the first signal, and the second network device has an association relationship with the first network device.

16. A wireless communication method, comprising:
sending, by a first network device, a first signal to a terminal device;
wherein the first signal is configured to supply energy to the terminal device and to determine locating information of the terminal device.

17. The method of claim 16, wherein the first signal corresponds to at least one of transmit power of the first signal or spatial information of the first signal.

18. The method of claim 16 or 17, wherein the locating information comprises at least one of a first identifier of the first signal or a second identifier of the first signal.

19. The method of claim 18, wherein the first identifier is associated with transmit power of the first signal, and the second identifier corresponds to spatial information of the first signal.

20. The method of claim 18 or 19, wherein at least one of the first identifier or the second identifier is carried in any one of the first signal, a signal associated with the first signal, or a channel associated with the first signal.

21. The method of claim 16 or 17, wherein the locating information comprises a third identifier of the first signal.

22. The method of claim 21, wherein the third identifier is associated with transmit power of the first signal, and/or, the third identifier corresponds to spatial information of the first signal.

23. The method of claim 21 or 22, wherein the third identifier is carried in any one of the first signal, a signal associated with the first signal, or a channel associated with the first signal.

24. The method of any one of claims 16-23, wherein the locating information comprises at least one of a first type identifier or an identifier of the terminal device;
wherein the first type identifier is configured to identify an information type of the locating information.

25. The method of any one of claims 16-24, further comprising:
sending, by the first network device, triggering information to the terminal device;
wherein the triggering information is configured to trigger the terminal device to determine the locating information according to the first signal.

26. The method of claim 25, wherein the triggering information and the first signal are carried on a same frequency domain resource or different frequency domain resources.

27. The method of claim 25 or 26, wherein the triggering information comprises at least one of a second type identifier, an identifier of the terminal device, or an identifier of a terminal device group;
wherein the terminal device group comprises the terminal device, and the second type identifier is configured to identify an information type of the triggering information.

28. The method of any one of claims 25-27, further comprising:
receiving, by the first network device, first control information sent by a second network device;
wherein the second network device has an association relationship with the first network device, and the first control information is configured to control the first network device to send the triggering information to the terminal device.

29. The method of any one of claims 25-28, characterized further as:
receiving, by the first network device, second control information sent by a second network device;
wherein the second network device has an association relationship with the first network device, and the second control information is configured to control the first network device to send the first signal.

30. The method of any one of claims 16-29, wherein the first network device sends a plurality of signals, the plurality of signals are configured to supply energy, and the plurality of signals comprise the first signal.

31. The method of claim 30, wherein any two signals of the plurality of signals correspond to different transmit power, and/or, any two signals of the plurality of signals correspond to different spatial information.

32. The method of claim 30 or 31, wherein the plurality of signals are sent in a descending order of transmit power.

33. The method of any one of claims 30-32, wherein the plurality of signals are sent in different time or simultaneously.

34. The method of claim 33, wherein any two signals of the plurality of signals correspond to different frequency domain resources, and/or, any two signals of the plurality of signals correspond to different code domain resources.

35. The method of any one of claims 30-34, further comprising:
receiving, by the first network device, the locating information; and
determining, by the first network device, position information of the terminal device according to the locating information.

36. The method of claim 35, wherein the determining, by the first network device, the position information of the terminal device according to the locating information comprises:
determining, by the first network device, the position information of the terminal device according to the locating information and an association relationship among the plurality of signals.

37. The method of claim 36, further comprising:
sending, by the first network device, the position information of the terminal device to a second network device;
wherein the second network device is a network device for controlling the first network device.

38. The method of any one of claims 16-34, further comprising:
sending, by the first network device, the locating information to a second network device;
wherein the second network device has an association relationship with the first network device.

39. A wireless communication method, comprising:
receiving, by a second network device, locating information or position information of a terminal device;
wherein the locating information is determined according to a first signal, the locating information is configured to determine the position information of the terminal device, and the first signal is configured to supply energy to the terminal device.

40. The method of claim 39, wherein the first signal corresponds to at least one of transmit power of the first signal or spatial information of the first signal.

41. The method of claim 39 or 40, wherein the locating information comprises at least one of a first identifier of the first signal or a second identifier of the first signal.

42. The method of claim 41, wherein the first identifier is associated with transmit power of the first signal, and the second identifier corresponds to spatial information of the first signal.

43. The method of claim 41 or 42, wherein at least one of the first identifier or the second identifier is carried in any one of the first signal, a signal associated with the first signal, or a channel associated with the first signal.

44. The method of claim 39 or 40, wherein the locating information comprises a third identifier of the first signal.

45. The method of claim 44, wherein the third identifier is associated with transmit power of the first signal, and/or, the third identifier corresponds to spatial information of the first signal.

46. The method of claim 44 or 45, wherein the third identifier is carried in any one of the first signal, a signal associated with the first signal, or a channel associated with the first signal.

47. The method of any one of claims 39-46, wherein the locating information comprises at least one of a first type identifier or an identifier of the terminal device;
wherein the first type identifier is configured to identify an information type of the locating information.

48. The method of any one of claims 39-47, further comprising:
sending, by the second network device, first control information to a first network device;
wherein the first network device is a network device that generates the first signal, the first control information is configured to control the first network device to send triggering information to the terminal device, and the triggering information is configured to trigger the terminal device to determine the locating information according to the first signal.

49. The method of any one of claims 39-48, further comprising:
sending, by the second network device, second control information to a first network device;
wherein the first network device is a network device that generates the first signal, and the second control information is configured to control the first network device to send the first signal.

50. A terminal device, comprising:
a processing unit, configured to determine locating information of the terminal device according to a first signal; and
a communication unit, configured to report the locating information;
wherein the first signal is configured to supply energy to the terminal device.

51. A network device, wherein the network device is a first network device, and the network device comprises:
a communication unit, configured to send a first signal to a terminal device;
wherein the first signal is configured to supply energy to the terminal device and to determine locating information of the terminal device.

52. A network device, wherein the network device is a second network device, and the network device comprises:
a communication unit, configured to receive locating information or position information of a terminal device;
wherein the locating information is determined according to a first signal, the locating information is configured to determine the position information of the terminal device, and the first signal is configured to supply energy to the terminal device.

53. A terminal device, comprising: a processor and a memory, wherein the memory is configured to store a computer program, and the processor is configured to call and run the computer program stored in the memory to execute the method of any one of claims 1 to 15.

54. A network device, comprising: a processor and a memory, wherein the memory is configured to store a computer program, and the processor is configured to call and run the computer program stored in the memory to execute the method of any one of claims 16 to 49.

55. A chip, comprising: a processor, configured to call and run a computer program in a memory to enable a device having installed thereon the chip to execute the method of any one of claims 1 to 15.

56. A chip, comprising: a processor, configured to call and run a computer program in a memory to enable a device having installed thereon the chip to execute the method of any one of claims 16 to 49.

57. A computer-readable storage medium having stored thereon a computer program which enables a computer to execute the method of any one of claims 1 to 15.

58. A computer-readable storage medium having stored thereon a computer program which enables a computer to execute the method of any one of claims 16 to 49.

59. A computer program product, comprising computer program instructions, the computer program instructions enabling a computer to execute the method of any one of claims 1 to 15.

60. A computer program product, comprising a computer program instructions, the computer program instructions enabling a computer to execute the method of any one of claims 16 to 49.

61. A computer program, enabling a computer to execute the method of any one of claims 1 to 15.

62. A computer program, enabling a computer to execute the method of any one of claims 16 to 49.
